# EUROPÄISCHE PATENTSCHRIFT

(11) **EP 3 504 085 B1**
(45) Veröffentlichungstag und Bekanntmachung des Hinweises auf die Patenterteilung: **06.01.2021**
(21) Anmeldenummer: 17722782.4
(22) Anmeldetag: 11.05.2017
(51) Int. Cl.: B60R 16/03, H02J 7/14, H02J 1/06, H02J 9/06

(54) **KRAFTFAHRZEUGBORDNETZ SOWIE KRAFTFAHRZEUG MIT EINEM KRAFTFAHRZEUGBORDNETZ**
MOTOR VEHICLE ELECTRICAL SYSTEM, AND MOTOR VEHICLE COMPRISING A MOTOR VEHICLE ELECTRICAL SYSTEM
RÉSEAU DE BORD DE VÉHICULE À MOTEUR ET VÉHICULE À MOTEUR DOTÉ D'UN TEL RÉSEAU DE BORD POUR VÉHICULE À MOTEUR

(30) Priorität: 25.08.2016 DE 102016115823
(43) Veröffentlichungstag der Anmeldung: 03.07.2019
(73) Patentinhaber: Auto-Kabel Management GmbH, 79688 Hausen i.W. (DE)
(72) Erfinder: TAZARINE, Wacim, 41812 Erkelelenz (DE); GRONWALD, Frank, 50181 Bedburg (DE); BETSCHER, Simon, 41515 Grevenbroich (DE)
(74) Vertreter: Cohausz & Florack
(86) Internationale Anmeldenummer: PCT/EP2017/061249
(87) Internationale Veröffentlichungsnummer: WO 2018/036670

(56) Entgegenhaltungen:
- EP-A1- 1 591 320
- EP-A2- 0 800 254
- EP-A2- 1 044 851
- WO-A2-2004/103771
- DE-A1- 10 009 775
- DE-A1- 10 317 362
- DE-A1-102005 005 236

## Beschreibung

Der Gegenstand betrifft ein Kraftfahrzeugbordnetz sowie ein Kraftfahrzeug mit einem Kraftfahrzeugbordnetz.

Der Anteil an elektrisch betriebenen Fahrzeugen, sogenannten electric vehicles (EV), sei es hybride elektrische Fahrzeuge (EHV), batterie-elektrische Fahrzeuge (BEV) oder auch Brennstoffzellenfahrzeuge (FCV) wird in Zukunft rapide ansteigen. Bei den elektrischen Fahrzeugen wird ein elektrischer Antriebsmotor, auch Traktionsmotor genannt, von in dem Fahrzeug verbauten elektrischen Energieversorgungen gespeist. Die elektrische Energie für den Traktionsmotor kann dabei von einem Generator stammen oder auch von elektrischen Energiespeichern, z.B. Akkumulatoren. Über geeignete Verschaltungen, beispielsweise über DC/DC Wandler oder AC/DC Wandler, werden die Energieversorgungen an den Traktionsmotor elektrisch angeschlossen. Diese Anschlusskonzepte können Teil des gegenständlichen Schaltsystems sein.

Die Akzeptanz von Elektromobilität ist ganz entscheidend von der Zuverlässigkeit von solchen elektrischen Fahrzeugen abhängig. Ausfälle von Antrieben werden durch die Nutzer kaum toleriert werden. Dieses Problem wird zunehmend virulent, wenn die elektrischen Fahrzeuge als autonom betriebene Fahrzeuge eingesetzt werden. Der Trend zu autonom fahrenden Autos ist ungebrochen und führt zu weiteren Fragen hinsichtlich der Ausfallsicherheit.

Die EP 1 004 851 A2 offenbart einen elektrischen Power-Ring-Bus mit Abgriff-Controllern, über die die Einspeisung des Powerrings oder die Versorgung von Verbrauchern am Powerring vorgenommen wird, so dass ein Kurzschluss auf dem Powerring zwischen zwei Controllern die Versorgung der Verbraucher nicht beeinträchtigt.

Aus diesem Grunde lag dem Gegenstand die Aufgabe zugrunde, ein Kraftfahrzeugbordnetz zu Verfügung zu stellen, welches erhöhten Sicherheitsanforderungen, insbesondere hinsichtlich Ausfallsicherheit, genügt.

Zur Lösung dieser Aufgabe wird ein Kraftfahrzeugbordnetz nach Anspruch 1 sowie ein Kraftfahrzeug nach Anspruch 14 vorgeschlagen.

Das Kraftfahrzeugbordnetz verfügt über zumindest zwei elektrisch parallel zueinander angeordnete Hauptleitungsstränge. Ein Hauptleitungsstrang kann dabei vorzugsweise das elektrische high side-Potential des Energiespeichers tragen. Auch können die Hauptleitungsstränge mit jeweils einer Isolation umgeben sein. In einem Hauptleitungsstrang können zwei gegeneinander isolierte Einzelleitungen angeordnet sein, insbesondere eine low-side (Masse)-Leitung und eine high side-Leitung. Die nachfolgend beschriebene Beschaltung der Hauptleitungsstränge sowie Querleitungsstränge bezieht sich vorzugsweise auf die high side -Leitung. Die Hauptleitungsstränge verlaufen bevorzugt elektrisch parallel zueinander und verbinden jeweils zwei voneinander getrennt betriebene Bordnetzenergieversorgungen.

Die Hauptleitungsstränge sind in zumindest zwei Bereichen miteinander elektrisch kurz geschlossen. Dabei können unmittelbare Verbindungen zwischen den Hauptleitungssträngen gebildet sein. Ausgehend von diesen Verbindungen kann eine Verbindungsleitung zu jeweils einem Pol jeweils einer der beiden Bordnetzenergieversorgungen abzweigen. Die Hauptleitungsstränge sind somit beide mit beiden Bordnetzenergieversorgungen, vorzugsweise auf gleichem elektrischem Potential verbunden.

Somit stellen die Hauptleitungsstränge zwei redundante Verbindungen zu den Bordnetzenergieversorgungen dar. Es hat sich gezeigt, dass hierdurch die Ausfallsicherheit erheblich vergrößert werden kann. Jeder Verbraucher, der über die Hauptleitungsstränge mit den Bordnetzenergieversorgungen verbunden ist, ist somit redundant mit elektrischer Energie von den beiden Bordnetzenergieversorgungen versorgt. Der Ausfall einer der beiden Bordnetzenergieversorgungen oder auch die Beschädigung eines Hauptleitungsstrangs kann durch die jeweils andere Bordnetzenergieversorgung bzw. den jeweils anderen Hauptleitungsstrang kompensiert werden.

Durch die beiden Hauptleitungsstränge wird zudem erreicht, dass im Normalbetrieb die Verlustleistung zwischen einem Verbraucher und den Bordnetzenergieversorgungen reduziert ist, da die elektrischen Ströme über beide Hauptleitungsstränge geführt sind und somit der Leitungswiderstand gegenüber einer einzelnen Leitung reduziert ist. Auf der anderen Seite kann gegenüber einer einzelnen Leitung bei gleicher Verlustleistung der Leitungsquerschnitt eines jeden Hauptleitungsstrangs reduziert werden.

Es hat sich herausgestellt, dass nicht nur Redundanz, sondern auch erhöhte Sicherheitsanforderungen wie etwa Fehlersicherung relevant sind. Insbesondere ist es für die Ausfallsicherheit wichtig, Fehlerquellen, z.B. etwaige Kurzschlüsse, von dem Kraftfahrzeugbordnetz trennen zu können, ohne den weiteren Betrieb des Kraftfahrzeugs zu behindern. Hierzu wird in dem Kraftfahrzeugbordnetz ein Kraftfahrzeugbordnetzschaltnetzwerk vorgesehen, über welches ein Verbraucher mit jeweils einem Hauptleitungsstrang verbunden wird. Die Hauptleitungsstränge sind in ihrem Verlauf vorzugsweise mechanisch, insbesondere aber elektrisch schaltbar unterbrochen durch zumindest jeweils ein Kraftfahrzeugbordnetzschaltnetzwerk. Das Kraftfahrzeugbordnetzschaltnetzwerk kann dabei eine schaltbare Verbindung entlang eines Hauptleitungsstrangs sowie zwischen dem Hauptleitungsstrang und einem Verbraucher sein.

Hierzu wird vorgeschlagen, dass in den zumindest zwei Hauptleitungssträngen den jeweiligen Hauptleitungsstrang insbesondere schaltbar unterbrechend zumindest ein Kraftfahrzeugbordnetzschaltnetzwerk angeordnet ist, wobei das Kraftfahrzeugbordnetzschaltnetzwerk zumindest drei Schalter aufweist.

Gegenständlich wird ein erster Schalter zwischen einem ersten Hauptleitungsstranganschluss und einem gemeinsamen Knotenpunkt vorgesehen. Ein zweiter Schalter wird zwischen einem zweiten Hauptleitungsstranganschluss und dem gemeinsamen Knotenpunkt vorgesehen. Der gemeinsame Knotenpunkt kann ein elektrisch mit den Ausgängen von den beiden mit einer jeweiligen der Energieversorgungen verbundenen Schaltern kurzgeschlossener Leiter sein. Die Schalter sind so angeordnet, dass sie eingangsseitig mit den jeweiligen Bordnetzenergieversorgungen verbunden werden können. Ausgangsseitig der Schalter werden diese über den gemeinsamen Knotenpunkt miteinander kurzgeschlossen.

Ausgehend von dem gemeinsamen Knotenpunkt verläuft dann eine elektrische Verbindung zu einem Verbraucher. In dieser zwischen dem gemeinsamen Knotenpunkt und dem Verbraucher verlaufenden Leitung ist ein dritter Schalter vorgesehen. Der Verbraucher ist dabei vorzugsweise an einen Verbraucheranschluss anschließbar, der ausgangsseitig des dritten Schalters angeordnet sein kann.

Die Schalter lassen sich über entsprechende Steuerbefehle an- und ausschalten. Im Normalfall dient eine der Energieversorgungen für den Betrieb des Verbrauchers. Durch eine zweite Energieversorgung wird die Energieversorgung des Verbrauchers redundant ausgestaltet. Um parasitäre Stromflüsse zwischen den beiden Energieversorgungen auszuschließen, ist für jeden der Energieversorgungen jeweils ein Schalter vorgesehen. Hierüber kann verhindert werden, dass Ausgleichströme zwischen den Energieversorgungen fließen.

Darüber hinaus ist es aus sicherheitstechnischen Gründen notwendig, die Energieversorgungen vom Verbraucher trennen zu können. Aus diesem Grunde ist gegenständlich der dritte Schalter vorgesehen, der zwischen dem gemeinsamen Knotenpunkt und dem Anschluss für den Verbraucher angeordnet ist.

Im Betrieb arbeitet das redundante Schaltsystem derart, dass für eine Stromlosschaltung des Verbrauchers in der Regel der dritte Schalter geöffnet wird.

Verbraucher im Sinne des Gegenstandes sind z.B. der Traktionsmotor, Servomotoren für die Lenkung, das Bremsaggregat oder andere, sicherheitsrelevante Verbraucher. Gegenständlich wird durch die ersten beiden Schalter eine zweikanalige Energieversorgung für einen Verbraucher ermöglicht.

Auch ein autonom betriebenes Kraftfahrzeug kann mit einem gegenständlichen Bordnetz ausgestattet sein. Durch die Autonomie des Fahrens ist der Schutz vor Ausfällen, insbesondere des Antriebsstrang oder anderer sicherheitskritischer Verbraucher besonders wichtig. Der Fahrer greift beim autonomen Fahren nicht mehr in den Fahrprozess ein und ein Fehler an kritischen Verbrauchern, wie z.B. dem Antrieb, dem Bremssystem etc. kann durch die fehlende Überwachung durch den Fahrzeugführer zu erheblichen Unfallrisiken führen. Diese gilt es zu vermeiden. Nicht nur der Antriebsstrang, sondern alle weiteren sicherheitskritischen Verbraucher müssen vorzugsweise redundant abgesichert sein. Hierzu zählen z.B. die Lenkung, insbesondere der Servomotor für die Lenkung oder das Bremsaggregat sowie alle weiteren Verbraucher, die bei einem Ausfall zu einem sicherheitskritischen Zustand führen können.

Mit Hilfe des gegenständlichen Schaltsystems ist es möglich, die Ausfallsicherheit des Verbrauchers erheblich zu erhöhen. Durch eine geschickte Anordnung von einer Anzahl von Schaltern zwischen den Energieversorgungen und dem Verbraucher wird die Ausfallsicherheit erhöht.

An jedem der Schalter kann ein Statussensor vorgesehen sein, der den Status des jeweiligen Schalters überwacht. Am dritten Schalter kann somit bei der Stromlosschaltung überwacht werden, ob dieser tatsächlich geöffnet ist. Hierdurch wird sichergestellt, dass der Verbraucher von den Energieversorgungen getrennt ist.

Wird jedoch festgestellt, dass der Schalter trotz eines Befehls zum Öffnen nicht richtig öffnet, beispielsweise weil er verklebt oder verschweißt ist, kann ein Steuerbefehl den ersten und den zweiten Schalter öffnen. Hierdurch werden die Energieversorgungen ebenfalls von dem Verbraucher getrennt. Das sich hieraus ergebene Schaltkonzept bietet eine Redundanz bei der Trennung des Verbrauchers von den Energieversorgungen.

Im Fahrbetrieb ist der dritte Schalter in der Regel immer geschlossen. Darüber hinaus ist zumindest eine der Energieversorgungen mit dem Verbraucher elektrisch verbunden. Hierzu wird mittels eines Schaltbefehls entweder der erste oder der zweite Schalter geschlossen. Energie fließt somit von einer der Energieversorgungen über den jeweiligen Schalter zu dem Verbraucher. Wird festgestellt, dass der zu schließende Schalter nicht geschlossen wurde oder dass der Stromfluss zwischen dem Verbraucher und der Energieversagung zusammenbricht, obwohl der Verbraucher nach wie vor angesteuert werden soll, was zum Beispiel dann passiert, wenn die mit dem Verbraucher verbundene Energieversorgung defekt ist, kann ein Steuersignal für den jeweils anderen Schalter erzeugt werden, mit dem dieser geschlossen wird und der Verbraucher über die jeweils andere Energieversorgung mit elektrischer Energie versorgt wird. Dies führt zu einer erheblich höheren Ausfallsicherheit, da der Verbraucher stets mit einer der beiden Energieversorgungen verbunden sein kann.

Auch ist es möglich, im Betrieb beide Schalter zwischen dem Knotenpunkt und den jeweiligen Energieversorgungen zu schließen. Hierdurch ist ein Ausgleichsstrom zwischen den Energieversorgungen möglich. Z.B. kann eine erste Energieversorgung einen Generator aufweisen. Dieser Generator kann über einen optionalen Wandler, z.B. einen AC/DC Wandler oder einen DC/DC Wandler und das Schaltsystem die zweite Energieversorgung, z.B. einen Akkumulator, laden.

Durch die beiden Hauptleitungsstränge ist auch ein Ausfall eines gesamten Bordnetzschaltnetzwerks und zusätzlich einer Bordnetzenergieversorgung kompensierbar. In diesem Fall kann ein Versorgungsstrom zu einem Verbraucher auf einer ersten Hauptleitungsstrang über z.B. den gesamten zweiten Hauptleitungsstrang und dann über den verbleibenden ersten Hauptleitungsstrang zu dem Verbraucher fließen.

Gemäß einem Ausführungsbeispiel wird vorgeschlagen, dass zumindest einer der Hauptleitungsstränge aus zumindest drei Leitungsabschnitten gebildet ist, wobei zumindest einer der Leitungsabschnitte zwischen zwei Kraftfahrzeugbordnetzschaltnetzwerken angeordnet ist.

Die Leitungsabschnitte sind jeweils voneinander getrennte Bauteile, die zwischen den Kraftfahrzeugbordnetzschaltnetzwerken angeordnet sind. Die Leitungsabschnitte bilden abschnittsweise einen Hauptleitungsstrang.

Jeder Leitungsabschnitt kann dabei beispielsweise als isolierte ein- oder zweiadrige Leitungen gebildet sein. Die Leitungsabschnitte können vorzugsweise jeweils mit den Hauptleitungsanschlüssen der Kraftfahrzeugbordnetzschaltnetzwerke verbunden sein. Elektrischer Strom fließt vorzugsweise von einem Bordnetzenergiespeicher über den Bereich eines ersten Kurzschlusses zwischen zwei Hauptleitungssträngen zu einem ersten Kraftfahrzeugbordnetzschaltwerk und von dort jeweils über einen Leitungsabschnitt zu einem nächsten Kraftfahrzeugbordnetzschaltnetzwerk bis zu dem Bereich des zweiten Kurzschlusses zwischen den Hauptleitungssträngen und von dort gegebenenfalls zu dem zweiten Bordnetzenergiespeicher. Vorzugsweise fließt der elektrische Strom jedoch, je nach Schalterstellung, nur von einem Bordnetzenergiespeicher zu einem Verbraucher über die Leitungsabschnitte.

Um alle an einem Hauptleitungsstrang angeschlossenen Verbraucher, die jeweils über ein Kraftfahrzeugbordnetzschaltnetzwerk angeschlossen sind, redundant versorgen zu können, wird vorgeschlagen, dass die Hauptleitungsstränge im Bereich ihrer jeweiligen distalen Enden miteinander kurzgeschlossen sind. Ein solcher elektrischer Kurzschluss kann insbesondere durch eine mechanische Verbindung der Leiter der Hauptleitungsstränge miteinander herbeigeführt werden. Im Bereich dieser Verbindung kann ein Abgang zu einem Bordnetzenergiespeicher angeordnet sein. Auch kann der Kurzschluss zwischen den Hauptleitungssträngen unmittelbar in einem Anschlussteil für einen Bordnetzenergiespeicher gebildet sein. Ein solches Anschlussteil kann vorzugsweise eine Batteriepolklemme sein.

Die jeweiligen distalen Enden der Hauptleitungsstränge können vorzugsweise flexible Leitungen, insbesondere Grundleitungen sein. Diese können von den beiden Hauptleitungssträngen vorzugsweise auf Crimpanschlüsse einer Batteriepolklemme oder eines sonstigen Anschlussteils geführt sein und gemeinsam dort mechanisch als auch elektrisch miteinander und dem Anschlussteil verbunden sein.

Zwischen den jeweiligen Hauptleitungsstranganschlüssen der Kraftfahrzeugbordnetzschaltnetzwerke können die Leitungsabschnitte als Rund- oder Flachleiter gebildet sein. Die Leitungsabschnitte können aus Aluminiumwerkstoff oder Kupferwerkstoffen gebildet sein. Die Leitungsabschnitte können aus einem Kabel mit einer Kabelseele aus einem Kupfer- oder Aluminiumwerkstoff und einer Isolation gebildet sein. Die Kabelseele ist vorzugsweise aus einem Vollmaterial gebildet, kann jedoch auch in einzelnen Leitungsabschnitten aus einem Litzenleiter mit einer Mehrzahl verseilter Litzen gebildet sein.

Die Leitungsabschnitte können an ihren jeweiligen distalen Enden mit Anschlussteilen versehen sein, mit denen diese an die Hauptleitungsanschlüsse der Kraftfahrzeugbordnetzschaltnetzwerke anschließbar sind. Insbesondere können dies Anschlusskonsolen zum Verschrauben der Leitungsabschnitte an den jeweiligen Anschlüssen sein.

Gemäß einem Ausführungsbeispiel wird vorgeschlagen, dass zumindest ein Kraftfahrzeugbordnetzschaltnetzwerk zumindest einen vierten Schalter zwischen einem Querleitungsanschluss und dem gemeinsamen Knotenpunkt aufweist. Wie bereits erwähnt, sind die Hauptleitungsstränge in zumindest zwei Bereichen miteinander kurzgeschlossen. Ausgehend von diesen Bereichen sind die Hauptleitungsstränge mit den jeweiligen Bordnetzenergieversorgungen verbunden. Um jedoch eine weitere erhöhte Ausfallsicherheit zu gewährleisten, können die Hauptleitungsstränge auch in ihrem Verlauf zumindest ein weiteres Mal miteinander verbunden werden. Hierzu können Querleitungen vorgesehen sein, welche elektrisch schaltbar über den vierten Schalter mit dem Hauptleitungsstrang bzw. den Hauptleitungssträngen verbindbar sind.

Über die Querleitungen können somit elektrisch schaltbar Verbindungen zwischen den beiden Hauptleitungssträngen in deren Verlauf hergestellt werden. Diese Verbindungen führen dazu, dass auch bei Ausfall von mehreren Kraftfahrzeugbordnetzschaltnetzwerken die Versorgung von den nicht hieran angeschlossenen Verbrauchern gewährleistet werden kann. Der elektrische Strom kann durch eine geeignete Schaltung der ersten, zweiten und vierten Schalter über die jeweiligen Hauptleitungsstränge zu dem Verbraucher "geroutet" werden.

Zur Ansteuerung der jeweiligen Schalter ist es notwendig, Regeleingangsgrößen zu kennen. Solche Regeleingangsgrößen können beispielsweise unmittelbar an den jeweiligen Hauptleitungssträngen und/oder den Kraftfahrzeugbordnetzschaltnetzwerken durch darin bzw. daran angeordnete Sensoren gemessen werden. Beispielsweise können Temperatur, Stromstärke und/oder auch Spannung durch geeignete Sensoren gemessen werden. Tritt ein Kurzschluss an einem Verbraucher auf, so bricht die Spannung beispielsweise in dem diesen Verbraucher zugeordneten Kraftfahrzeugbordnetzschaltnetzwerk unmittelbar zusammen, was durch einen geeigneten Sensor gemessen werden kann. Dann kann unmittelbar, auch ohne ein äußeres Eingreifen, der dritte Schalter geöffnet werden. Auch ist es möglich, dass eine zentrale Steuereinheit die Sensorgrößen erfasst und hieraus einen Zustand des Kraftfahrzeugbordnetzes bestimmt und die Schalter geeignet ansteuert.

Neben den genannten Größen ist es auch möglich, Zustände von Verbrauchern und Erwartungswerte für Verbraucher zu erfassen. Erwartungswerte für Verbraucher können parametriert sein und beispielsweise angeben, wie hoch eine bestimmte Stromstärke eines Verbrauchers ist. Wird diese Stromstärke überschritten, kann auf einem Fehlbetrieb des Verbrauchers geschlossen werden.

Darüber hinaus können beispielsweise Ladezustände der Bordnetzenergieversorgungen, Fahrzeugzustände oder Crashsignale erfasst und beispielsweise in einem zentralen Rechner verarbeitet werden. Je nach Fahrzeugzustand kann es sinnvoll sein, einzelne Verbraucher von der Energieversorgung auszunehmen oder die Redundanz an anderen Verbrauchern zu erhöhen. Hierzu können beispielsweise einzelne Verbraucher durch Öffnen des dritten Schalters des jeweiligen Kraftfahrzeugbordnetzschaltnetzwerks von dem Kraftfahrzeugbordnetz getrennt werden oder es können gezielt Querverbindungen zwischen den Hauptleitungssträngen durch Schließen der vierten Schalter hergestellt werden, um die Versorgungssicherheit einzelner Verbraucher zu erhöhen.

Um die Hauptleitungsstränge miteinander zu verbinden, sind die Querleitungsstränge vorgesehen. Diese sind gemäß einem Ausführungsbeispiel an den Querleitungsstranganschlüssen der jeweiligen Kraftfahrzeugbordnetzschaltnetzwerke angeschlossen. Ein solcher Anschluss kann ebenfalls über geeignete Anschlussterminals erfolgen. Die Querleitungsstränge können je nach Bauraumanforderung aus Rund- oder Flachleitungen, flexibel oder starr gestaltet sein.

Gemäß einem Ausführungsbeispiel wird vorgeschlagen, dass die Hauptleitungsstränge und die Querleitungsstränge ein zumindest in Teilen, vorzugsweise vollvermaschtes Verteilnetz bilden. Wie bereits erläutert, können Querverbindungen zwischen den Hauptleitungssträngen durch die Querleitungsstränge gebildet werden. Die Querverbindungen sind schaltbar über den vierten Schalter. Die Hauptleitungsstränge sind jeweils an den Kraftfahrzeugbordnetzschaltnetzwerken durch die ersten und die zweiten Schalter unterbrechbar. Durch ein geeignetes Öffnen und Schließen der ersten, zweiten und vierten Schalter lassen sich beliebige Pfade innerhalb des Kraftfahrzeugbordnetzes schalten, so dass die Verbindung zwischen den Bordnetzenergieversorgungen und den Verbrauchern individuell einstellbar sind. Dann kann von einem vermaschten Verteilnetz gesprochen werden.

Gemäß einem Ausführungsbeispiel wird vorgeschlagen, dass zumindest einer der Leitungsabschnitte und/oder zumindest einer der Querleitungsstränge als Flachleitung, insbesondere aus einer Flachleitung aus einem Vollmaterial, insbesondere aus einem Kupferwerkstoff oder einem Aluminiumwerkstoff gebildet ist.

Gemäß einem Ausführungsbeispiel wird vorgeschlagen, dass die Schalter jeweils individuell ansteuerbar sind. Hierbei ist es möglich, dass jedes einzelne Kraftfahrzeugbordnetzschaltnetzwerk mit einer individuellen Steuerschaltung mit einem Steuerrecht verbunden ist. Auch ist es denkbar, dass zumindest zwei, vorzugsweise alle Kraftfahrzeugbordnetzschaltnetzwerke über eine Busleitung miteinander verbunden sind. Die Busleitung ist vorzugsweise ebenfalls in einer vermaschten Struktur und als vermaschter Ring gebildet. Die Busleitung ist dabei vorzugsweise mit dem zentralen Steuerrechner verbunden und über die Busleitung kann jedes Kraftfahrzeugbordnetzschaltnetzwerk bzw. jeder einzelne darin verbaute Schalter individuell angesteuert werden. Die Sensorsignale aus den Sensoren der Kraftfahrzeugbordnetzschaltnetzwerke als auch der an den Hauptleitungssträngen angeordneten Sensoren können ebenfalls über die Busleitung geleitet werden.

Erfindungsgemäß werden die Signale über das Kraftfahrzeugbordnetz selbst übertragen. Hierzu wird zumindest einer der Hauptleitungsstränge mit einer Kommunikationseinrichtung gekoppelt, wobei die Kommunikationseinrichtung Schaltbefehle für zumindest einen der Schalter auf den Hauptleitungsstrang aussendet. Erfindungsgemäß sind beide Hauptleitungsstränge mit der Kommunikationseinrichtung gekoppelt, so dass auch die Kommunikation entsprechend der elektrischen Versorgung redundant gebildet ist. Über den Hauptleitungsstrang kann beispielsweise mittels Pulsweitenmodulation, erfindungsgemäß in der Art einer Powerline Communication, eine Ansteuerung der jeweiligen Kraftfahrzeugbordnetzschaltnetzwerke erfolgen. Auch können Sensorsignale und Zustände der Kraftfahrzeugbordnetzschaltnetzwerke entsprechend über das Kraftfahrzeugbordnetz an die bzw. von den Kommunikationseinrichtungen übertragen werden.

Gemäß einem Ausführungsbeispiel wird vorgeschlagen, dass zumindest eine der Bordnetzenergieversorgung als Energiespeicher, insbesondere als Batterie oder Akkumulator gebildet ist. Auf der anderen Seite ist es auch möglich, dass zumindest eine der Bordnetzenergieversorgung als DC/DC Wandler oder Generator gebildet ist. Insbesondere können die zumindest zwei Bordnetzenergieversorgungen voneinander verschieden sein.

Der Verbraucheranschluss ist vorzugsweise zum Anschluss eines Verbrauchers über ein einziges Energiekabel vorgesehen. Insbesondere kann jeweils ein Verbraucheranschluss mit genau einem Verbraucher verbunden sein.

In diesem Zusammenhang sei erwähnt, dass ein Kraftfahrzeugbordnetzschaltnetzwerk zumindest zwei oder gar mehr dritte Schalter aufweisen kann. Über ein Kraftfahrzeugbordnetzschaltnetzwerk lassen sich zwei oder mehr Verbraucher, jeweils einzeln über einen dritten Schalter schaltbar mit jeweils einem Hauptleitungsstrang verbinden.

Die Schalter sind vorzugsweise als Halbleiterschalter oder Relais gebildet, insbesondere als sogenannte PROFETS. Die Stromtragfähigkeit der ersten und zweiten Schalter und ggf. des vierten Schalters ist vorzugsweis höher als die Stromtragfähigkeit eines dritten Schalters. Über den ersten und zweiten Schalter und ggf. den vierten Schalter fließen insbesondere die Ströme zu vielen im Bordnetz angeordnete Verbrauchern und über die dritten Schalter fließen nur die Ströme zu den angeschlossenen Verbrauchern. Somit wird vorgeschlagen, dass die Stromtragfähigkeit des ersten und zweiten Schalters höher ist, als die Stromtragfähigkeit des dritten Schalters.

Gemäß einem Ausführungsbeispiel wird vorgeschlagen, dass das Kraftfahrzeugbordnetzschaltnetzwerken in einem gemeinsamen Gehäuse verbaut ist. Insofern wird vorgeschlagen, dass die Schalter in einem gemeinsamen Gehäuse angeordnet sind, und dass an dem Gehäuse elektrische Kontakte für die Hauptleitungsanschlüsse, die Verbraucheranschlüsse und ggf. für die Querleitungsanschlüsse vorgesehen sind. In dem Gehäuse können die Schalter samt elektronischer Ansteuerung verbaut sein. Das Gehäuse kann das Schaltsystem von dem übrigen Bordnetzsystem kapseln. Über entsprechende Anschlüsse, beispielsweise Kontaktlaschen, lassen sich die Leitungen zu den jeweiligen Energieversorgungen bzw. zu dem Verbraucher anschließen.

Auch wird vorgeschlagen, dass die Schalter zumindest in Teilen auf einer gemeinsamen Leiterplatte angeordnet sind. In diesem Fall lassen sich vorzugsweise elektronische Bauelemente, wie beispielsweise Halbleiterbauelemente, insbesondere Halbleiterschalter, auf einer Leiterplatte anordnen und über eine geeignete Ansteuerelektronik ansteuern. Hierdurch wird auf einer kompakten Baugruppe das gesamte redundante Schaltsystem realisiert, welches vorzugsweise in einem gemeinsamen Gehäuse verbaut, insbesondere vergossen sein kann.

Die Schalter sind vorzugsweise reversibel schaltbar und unterscheiden sich somit von herkömmlichen Sicherungen, die jeweils nur einmal schaltbar sind. Die Schalter lassen sich häufig an- und ausschalten, wodurch ein Schaltbetrieb des redundanten Schaltsystems über die Lebensdauer der Fahrzeugs gewährleistet ist.

Gemäß einem Ausführungsbeispiel sind die Schalter, wie bereits zuvor erläutert, Halbleiterbauelemente. Dies können insbesondere Transistoren, vorzugsweise MOSFETs sein. Es ist jedoch auch möglich, die Schalter als Relais oder Schütze auszugestalten.

Die Schalter haben eine Stromtragfähigkeit von über 100A, insbesondere über 200A, vorzugsweise mehr als 300A. Die Schalter können Ströme von über 100A, vorzugsweise über 200A, insbesondere über 300 A sicher schalten, ohne dass diese nachhaltig beschädigt werden. Die Schalter können auch aus einer Kaskade von mehreren Halbleiterschaltern gebildet sein. Auch können mehrere Halbleiterschalter parallel zueinander geschaltet sein, so dass die Schaltleistung jedes einzelnen Schalters geringer ist.

Auch kann es sinnvoll sein, die Schalter mit unterschiedlichen Schaltfähigkeiten und/oder Stromtragfähigkeiten zu gestalten. So können der erste und der zweite Schalter gleicher Bauart sein, und der dritte Schalter kann z.B. hinsichtlich der Stromtragfähigkeit und/oder der Schaltfähigkeit geringer dimensioniert sein. Ausgleichsströme zwischen den Energieversorgungen können auch bis zu 300 A betragen, Betriebsströme für einen Verbraucher z.B. nur 10 bis 50 A. Entsprechende wären die beiden ersten Schalter für 300A Stromtragfähigkeit auszulegen, der dritte Schalter für nur 50 A.

Gemäß einem Ausführungsbeispiel wird vorgeschlagen, dass die Halbleiterschalter derart verschaltet sind, dass deren Bodydioden an dem ersten und dem zweiten Schalter gegenläufig geschaltet sind. D.h., dass die Stromflussrichtungen der beiden Bodydioden gegenläufig sind. Insbesondere sind die Stromflussrichtungen der Dioden entweder von dem Knotenpunkt wegweisend oder auf den Knotenpunkt zuweisend. Dies schließt einen Stromfluss über die Dioden von der ersten Energieversorgung zu der zweiten Energieversorgung und umgekehrt aus.

Ausgehend von dem Knotenpunkt ist das Schaltsystem über den dritten Schalter und vorzugsweise ein einziges Energiekabel mit dem Verbraucher verbunden. Zwischen dem Knotenpunkt bzw. dem dritten Schalter und dem Verbraucher kann auch noch eine Steuerelektronik für den Verbraucher vorgesehen sein, welche gegenständlich als zum Verbraucher zugehörig gezählt wird. Das Energiekabel kann dabei vorzugsweise aus einem Kupferwerkstoff oder einem Aluminiumwerkstoff gebildet sein. Das Energiekabel ist insbesondere ein geschirmtes Energiekabel. Vorzugsweise ist das Energiekabel als zweiadriges Kabel gebildet, bei dem auch die Masserückführung in dem Kabel gewährleitet ist und nicht, wie sonst üblich, über die Karosse realisiert wird.

Gemäß einem Ausführungsbeispiel wird vorgeschlagen, dass eine Masserückführung von dem Verbraucher über das Schaltsystem zu den jeweiligen Energieversorgungen erfolgt. Hierbei sind die Hauptleitungsstränge vorzugsweise zweiadrig und insbesondere geschirmt. Das Schaltsystem verfügt neben den Schaltern vorzugsweise über einen Strompfad für die Masserückführung, so dass die zweiadrigen Hauptleitungsstränge auch an das Schaltsystem angeschlossen werden können. Insbesondere wird auch in dem Gehäuse sowohl die Stromzuführung als auch die Masserückführung realisiert.

In der Stromzuführung, also High-side, sind vorzugsweise die Schalter vorgesehen und in der Masserückführung, also Low-side erfolgt ein Kurzschluss zwischen den elektrischen Kontakten des Schaltsystems, insbesondere zwischen den elektrischen Kontakten des Gehäuses. Dieser Kurzschluss erfolgt vorzugsweise über Leitungen innerhalb des Gehäuses. Das Gehäuse ist dabei vorzugsweise ebenfalls geschirmt und insbesondere mit der Schirmung der Energiekabel elektrisch kurzgeschlossen. Hierdurch wird eine durchgehende Schirmung des Schaltsystems gewährleistet.

Auch wird vorgeschlagen, dass die Schalter bzw. das Schaltsystem high-side angeordnet ist, also mit dem positiven Potential der Energieversorgungen. Auf der anderen Seite kann es auch sinnvoll sein, die Schalter bzw. das Schaltsystem low-side mit den Energieversorgungen zu verbinden. Das kann insbesondere zu dem Vorteil führen, dass die Betriebsspannung für die Schalter, insbesondere die Halbleiterschalter nicht noch zusätzlich über dem Potential der Energieversorgung liegen muss. Bei 12 V Bordnetzspannung muss bei einem Anschluss an high-side die Spannung an den Schaltern darüber liegen, also z.B. 17 oder 24 V, wogegen bei einem low-side Anschluss die Versorgungsspannung für die Schalter nur 5 V bzw. 12 V betragen muss.

Nachfolgend wird der Gegenstand anhand einer Ausführungsbeispiele zeigenden Zeichnung näher erläutert. In der Zeichnung zeigen:
- Fig. 1: ein gegenständliches Kraftfahrzeugbordnetz gemäß einem Ausführungsbeispiel;
- Fig. 2: ein gegenständliches Kraftfahrzeugbordnetzschaltnetzwerk gemäß einem Ausführungsbeispiel;
- Fig. 3: ein gegenständliches Kraftfahrzeugbordnetz gemäß einem weiteren Ausführungsbeispiel;

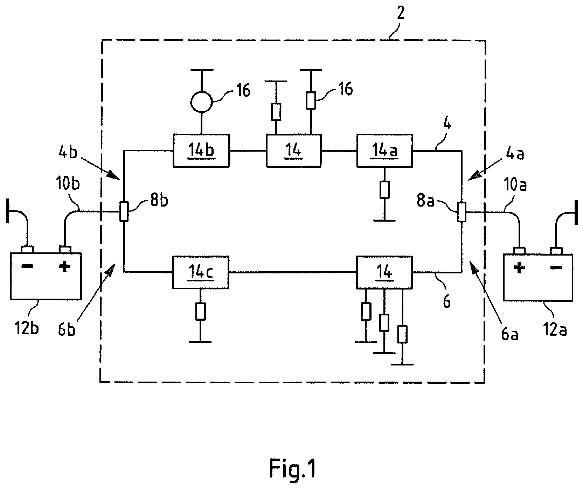

Fig. 1 zeigt ein Kraftfahrzeugbordnetz 2 mit zwei elektrisch parallel zueinander geschalteten Hauptleitungssträngen 4, 6. Die Hauptleitungsstränge 4, 6 sind im Bereich ihrer distalen Enden 4a, 6a respektive 4b, 6b unmittelbar miteinander verbunden. Ausgehend von der Verbindungsstelle 8a, b sind die Hauptleitungsstränge 4, 6 über ein vorzugsweise flexibles Kabel 10a, 10b mit jeweils einer Batterie 12a, 12b, die als Bordnetzenergieversorgung dienen, elektrisch verbunden.

Hierbei sind die flexiblen Kabel 10a, 10b jeweils high-side mit den jeweiligen Batterien 12a, 12b verbunden.

Die Hauptleitungsstränge 4, 6 sind durch Kraftfahrzeugbordnetzschaltnetzwerke unterbrochen. An den Kraftfahrzeugbordnetzschaltnetzwerken 14 sind Verbraucher 16 angeschlossen. Solche Verbraucher 16 können beispielsweise ein Starter, Hydraulikgeneratoren, Bremskraftverstärker, Lenkradverstärker, Fahrassistenzsysteme oder dergleichen sein. Zu erkennen ist, dass in einem Kraftfahrzeugbordnetzschaltnetzwerk 14 ein oder mehr Verbraucher 16 angeschlossen sein können.

Ferner ist in der Fig. 1 zu erkennen, dass die Hauptleitungsstränge 4, 6 einen geschlossenen Ring bilden und somit auf gleichem elektrischen Potential liegen. Durch die beiden Hauptleitungsstränge 4, 6 wird ein redundanter Betrieb der Verbraucher 16 ermöglicht. Die elektrischen High-Side-Potentiale der beiden Batterien 12a, 12b liegen beide jeweils an jedem Verbraucher 16 an. Beim Ausfall eines Hauptleitungsstrangs 4, 6 steht stets elektrisches Potential zumindest einer der Batterien 12a, 12b für einen Verbraucher 16 zur Verfügung, so dass die Ausfallsicherheit erheblich erhöht ist.

Die Kraftfahrzeugbordnetzschaltnetzwerke 14 verfügen, wie nachfolgend noch beschrieben werden wird, über selektiv schaltbare Schalter. Im Betriebsfall kann es beispielsweise dazu kommen, dass ein Hauptleitungsstrang 4 beispielsweise im Bereich des Kraftfahrzeugbordnetzschaltnetzwerks 14a unterbrochen ist. In diesem Fall wäre der Hauptleitungsstrang 4a noch über den Hauptleitungsstrang 6 mit der Batterie 12a und unmittelbar auch mit der Batterie 12b verbunden und die Verbraucher wären nach wie vor versorgt mit elektrischer Energie. Selbst bei einem zusätzlichen Ausfall beispielsweise im Bereich des Kraftfahrzeugbordnetzschaltnetzwerks 14c wäre für die verbleibenden Verbraucher weiterhin eine elektrische Versorgung entweder über die Batterie 12a oder die Batterie 12b gewährleistet. D.h., dass selbst bei einem multiplen Ausfall entlang der Hauptleitungsstränge 4, 6 eine Vielzahl an Verbrauchern 16 nach wie vor mit elektrischer Energie versorgt bleiben.

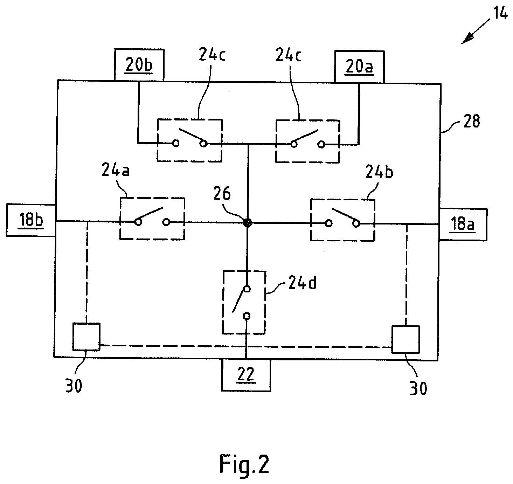

Fig. 2 zeigt ein Kraftfahrzeugbordnetzschaltnetzwerk 14 in einer schematischen Darstellung. Das Kraftfahrzeugbordnetzschaltnetzwerk 14 verfügt über zwei Hauptleitungsstranganschlüsse 18a, 18b. Ferner verfügt das Kraftfahrzeugbordnetzschaltnetzwerk 14 über ein oder mehrere Verbraucheranschlüsse 20a, 20b. Schließlich kann an einem Kraftfahrzeugbordnetzschaltnetzwerk 14 ein Querleitungsstranganschluss 22 vorgesehen sein.

Die Hauptleitungsstranganschlüsse 18a, 18b sind über einen ersten Schalter 24a und einem zweiten Schalter 24b mit einem gemeinsamen Knotenpunkt 26 verbunden. Ausgehend von dem gemeinsamen Knotenpunkt 26 können dritte Schalter 24c zu den Verbraucheranschlüssen 20a, b abzweigen. Ferner kann von dem gemeinsamen Knotenpunkt 26 ein vierter Schalter 24d zu einem Querleitungsanschluss 22 abzweigen.

Innerhalb eines Gehäuses 28 des Kraftfahrzeugbordnetzschaltnetzwerks 14 können Kommunikationseinrichtungen 30 vorgesehen sein, die zumindest mit den Hauptleitungsanschlüssen 18a, b und gegebenenfalls mit dem Querleitungsanschluss 22 dauerhaft in Verbindung sind und somit eine Kommunikation hierüber ermöglichen.

Ferner ist ein nicht dargestellter Prozessor innerhalb eines Kraftfahrzeugbordnetzschaltnetzwerks 14 vorgesehen, der mit den Kommunikationseinrichtungen 30 als auch mit den jeweiligen Schaltern 24 in Wirkverbindung ist. Über die Kommunikationseinrichtung 30 kann der Mikroprozessor Fehler empfangen und gegebenenfalls jeden einzelnen der Schalter 24 individuell öffnen oder schließen. Ferner kann der Prozessor nicht dargestellte Sensoren abfragen, um beispielsweise den Schalterzustand der Schalter 24, Spannungen, Temperaturen, Ströme oder dergleichen innerhalb des Kraftfahrzeugbordnetzschaltnetzwerks 14 erfassen. Mit Hilfe der erfassten Sensorwerte kann der Sensor selbsttätig Schalter 24 öffnen oder schließen oder die erfassten Werte über die Kommunikationseinrichtungen 30 aussenden.

Die Schalter 24 sind vorzugsweise Relais oder Hauptleiterschalter, insbesondere MOSFETS oder PROFETS.

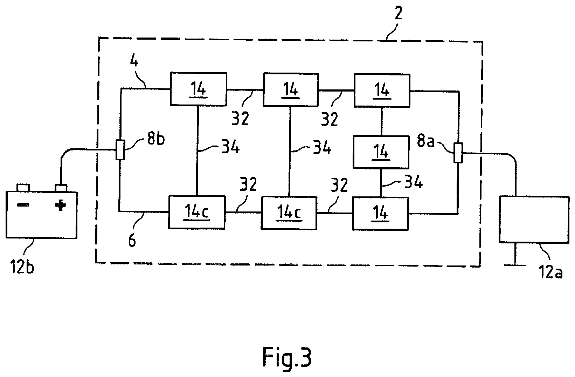

Fig. 3 zeigt ein Kraftfahrzeugbordnetz 2 in einer leicht veränderten Ausgestaltung gegenüber der Fig. 1. Zunächst ist zu erkennen, dass die Bordnetzenergieversorgung 12a vorliegend nicht mehr als Batterie gebildet ist, sondern beispielsweise als Generator. Darüber hinaus sind zwischen den Kraftfahrzeugbordnetzschaltnetzwerken 14 der Übersichtlichkeit halber nur in Fig. 3 die Leitungsabschnitte 32 dargestellt. Die Leitungsabschnitte 32 sind vorzugsweise im Leitungsquerschnitt und Leitungsprofil identisch zu den Abschnitten der Hauptleitungsstränge 4, 6 im Bereich der Verbindungsstellen 8a, 8b.

Ferner ist zu erkennen, dass Querleitungsstränge 24 jeweils zwischen zwei Kraftfahrzeugbordnetzschaltnetzwerken 14 angeordnet sind. Die Querleitungsstränge 34 können wahlweise über die vierten Schalter 24d mit den Hauptleitungssträngen 4, 6 verbunden werden. Durch die Querleitungsstränge 34 wird ein voll vermaschtes Verteilnetz ermöglicht, so dass eine Verbindung jedes einzelnen Verbrauchers, welche an die Kraftfahrzeugbordnetzschaltnetzwerke 14 angeschlossen ist, mit jeder der beiden Bordnetzenergieversorgungen 12a, 12b mit größtmöglicher Wahrscheinlichkeit sichergestellt ist. Innerhalb eines Querleitungsstrangs 34 kann auch ein Kraftfahrzeugbordnetzschaltnetzwerk 14 vorgesehen sein und gegebenenfalls dort ebenfalls ein Verbraucher 16 angeschlossen sein.

Es versteht sich, dass mehr als zwei Hauptleitungsstränge 4, 6 parallel zueinander innerhalb eines Kraftfahrzeugs verlegt sein können, der Übersichtlichkeit halber sind in den Fig. 1 und 3 jedoch nur zwei Hauptleitungsstränge 4, 6 dargestellt. Sind mehr als zwei Hauptleitungsstränge 4, 6 vorgesehen, können Querleitungsstränge zwischen jeweils zwei Hauptleitungssträngen wahlweise vorgesehen sein. Die Querleitungsstränge können räumlich voneinander getrennt sein, beispielsweise einer in einem vorderen Teil des Fahrzeugs, z.B.im oder am Motorraum und einer im hinteren Teil des Fahrzeugs, z.B. im/am Fond oder im/am Kofferraum. Durch gezieltes Schließen und Öffnen der Schalter 24 können wahlfrei Verbindungen zwischen den Kraftfahrzeugbordnetzschaltnetzwerken 14 und den Bordnetzenergieversorgungen 12a, 12b geschaltet werden und somit Leitungswege hergestellt werden, um gegebenenfalls Fehler oder Unterbrechungen innerhalb der Hauptleitungsstränge 4, 6 zu umgehen. Hierdurch wird die Auswahlsicherheit des Kraftfahrzeugbordnetzes 2 massiv erhöht, was insbesondere im Bereich der Elektromobilität und des automobilen Fahrens relevant sein wird.

### Bezugszeichenliste

- 2: Kraftfahrzeugbordnetz
- 4,6: Hauptleitungsstrang
- 4a, b: distales Ende
- 6a, b: distales Ende
- 8a, b: Verbindungsstelle
- 10a, b: flexibles Kabel
- 12a, b: Batterie
- 14: Kraftfahrzeugbordnetzschaltnetzwerk
- 16: Verbraucher
- 18a, b: Hauptleitungsstranganschluss
- 20a, b: Verbraucheranschluss
- 22: Querleitungsstranganschluss
- 24: Schalter
- 26: Knotenpunkt
- 28: Gehäuse
- 30: Kommunikationseinheit
- 32: Leitungsabschnitt
- 34: Querleitungsstrang

## Patentansprüche

1. Kraftfahrzeugbordnetz (2) mit
- zumindest zwei elektrisch parallel zueinander angeordneten Hauptleitungssträngen (4, 6), wobei die Hauptleitungsstränge (4, 6) in zwei voneinander getrennten Bereichen miteinander elektrisch kurzgeschlossen sind und einen Anschluss für jeweils eine von zumindest zwei Bordnetzenergieversorgungen aufweisen,
- wobei in den zumindest zwei Hauptleitungssträngen (4, 6) den jeweiligen Hauptleitungsstrang (4, 6) unterbrechend zumindest ein Kraftfahrzeugbordnetzschaltnetzwerk (14) angeordnet ist, wobei das Schaltnetzwerk (14) zumindest drei Schalter (24) aufweist, wobei
- ein erster Schalter (24) zwischen einem ersten Hauptleitungsstranganschluss (18a) und einem gemeinsamen Knotenpunkt (26) angeordnet ist,
- ein zweiter Schalter (24) zwischen einem zweiten Hauptleitungsstranganschluss (18b) und dem gemeinsamen Knotenpunkt (26) angeordnet ist, und
- ein dritter Schalter (24) zwischen dem gemeinsamen Knotenpunkt (26) und zumindest einem Verbraucheranschluss (20a, b) angeordnet ist
**dadurch gekennzeichnet,**
- **dass** die zwei Hauptleitungsstränge (4, 6) mit einer Kommunikationseinrichtung gekoppelt sind, wobei die Kommunikationseinrichtung Schaltbefehle für zumindest einen der Schalter (24) auf den Hauptleitungssträngen (4, 6) aussendet, so dass die Kraftfahrzeugbordnetzschaltnetzwerke (14) über Powerline Communication angesteuert sind.

2. Kraftfahrzeugbordnetz (2) nach Anspruch 1,
**dadurch gekennzeichnet,**
- **dass** zumindest einer der Hauptleitungsstränge (4, 6) aus zumindest drei Leitungsabschnitten (32) gebildet ist, wobei zumindest einer der Leitungsabschnitte (32) zwischen zwei Kraftfahrzeugbordnetzschaltnetzwerken (14) angeordnet ist.

3. Kraftfahrzeugbordnetz (2) nach einem der Ansprüche 1 bis 2,
**dadurch gekennzeichnet,**
- **dass** jeweils ein Leitungsabschnitt (32) eines Hauptleitungsstrangs (4, 6) an einem der Hauptleitungsstranganschlüsse (18a, b) angeschlossen ist.

4. Kraftfahrzeugbordnetz (2) nach einem der Ansprüche 1 bis 3,
**dadurch gekennzeichnet,**
- **dass** die Hauptleitungsstränge (4, 6) im Bereich ihrer jeweiligen distalen Enden miteinander kurz geschlossen sind, insbesondere dass die Hauptleitungsstränge (4, 6) im Bereich des Kurzschlusses unmittelbar miteinander verbunden sind.

5. Kraftfahrzeugbordnetz (2) nach einem der vorangehenden, Ansprüche,
**dadurch gekennzeichnet,**
- **dass** zumindest ein Kraftfahrzeugbordnetzschaltnetzwerk (14) zumindest einen vierten Schalter (24) zwischen einem Querleitungsstranganschluss (22) und dem gemeinsamen Knotenpunkt (26) aufweist.

6. Kraftfahrzeugbordnetz (2) nach einem der vorangehenden Ansprüche,
**dadurch gekennzeichnet,**
- **dass** die Hauptleitungsstränge (4, 6) über zumindest einen Querleitungsstrang (34) miteinander verbunden sind.

7. Kraftfahrzeugbordnetz (2) nach einem der vorangehenden, Ansprüche,
**dadurch gekennzeichnet,**
- **dass** ein Querleitungsstrang (34) an einem Querleitungsstranganschluss (22) angeschlossen ist.

8. Kraftfahrzeugbordnetz (2) nach einem der vorangehenden Ansprüche,
**dadurch gekennzeichnet,**
- **dass** die Hauptleitungsstränge (4, 6) und die Querleitungsstränge (34) ein zumindest in Teilen, vorzugsweise voll vermaschtes Verteilnetz bilden.

9. Kraftfahrzeugbordnetz (2) nach einem der vorangehenden Ansprüche,
**dadurch gekennzeichnet,**
- **dass** zumindest einer der Leitungsabschnitte (32) und/oder zumindest einer der Querleitungsstränge (34) als Flachleitung, insbesondere aus einer Flachleitung aus einem Vollmaterial, insbesondere aus einem Kupferwerkstoff oder einem Aluminiumwerkstoff gebildet ist.

10. Kraftfahrzeugbordnetz (2) nach einem der vorangehenden Ansprüche,
**dadurch gekennzeichnet,**
- **dass** die Schalter (24) jeweils individuell ansteuerbar sind.

11. Kraftfahrzeugbordnetz (2) nach einem der vorangehenden Ansprüche,
**dadurch gekennzeichnet,**
- **dass** zumindest eines der Kraftfahrzeugbordnetzschaltnetzwerke (14) einen Stromsensor und/oder einen Spannungssensor und/oder einen Temperatursensor aufweist und dass zumindest einer der Schalter (24) abhängig von einem Sensorsignal gesteuert wird.

12. Kraftfahrzeugbordnetz (2) nach einem der vorangehenden Ansprüche,
**dadurch gekennzeichnet,**
- **dass** zumindest eine der Bordnetzenergieversorgungen als Energiespeicher, insbesondere als Batterie (12a, b), Akkumulator oder als DC/DC Wandler oder Generator gebildet ist.

13. Kraftfahrzeugbordnetz (2) nach einem der vorangehenden Ansprüche,
**dadurch gekennzeichnet,**
- **dass** der Verbraucher (16) über ein einziges Energiekabel mit dem Verbraucheranschluss (20a, b) verbunden ist.

14. Kraftfahrzeug mit einem Kraftfahrzeugbordnetz (2) nach einem der vorangehenden Ansprüche, und zumindest zwei Bordnetzenergieversorgungen und einem Verbraucher (16).

## Claims

1. Motor vehicle electrical system (2) with
- at least two main line strands (4,6) arranged electrically parallel to one another, the main line strands (4,6) being electrically short-circuited with one another in two regions separated from one another and each having a connection for one of at least two on-board power supplies,
- at least one motor vehicle electrical system switching network being arranged in the at least two main line strands (4,6) interrupting the respective main line strand (4,6), the switching network (14) having at least three switches (24), wherein
- a first switch (24) is disposed between a first main line strand terminal (18a) and a common node (26),
- a second switch (24) is disposed between a second main line strand terminal (18a) and the common node (26), and
- a third switch (24) is arranged between the common node (26) and at least one load terminal (20a,b)
- **characterized in that**
the two main line strands (4,6) are coupled to a communication device, the communication device emitting switching commands for at least one of the switches (24) on the main line strand (4,6), so that the motor vehicle electrical system switching network (14) is controlled via powerline communication..

2. Motor vehicle electrical system (2) according to claim 1,
**characterized in that**
- at least one of the main line strands (4,6) is formed from at least three line sections (32), at least one of the line sections (32) being arranged between two motor vehicle electrical system switching networks (14).

3. Motor vehicle electrical system (2) according to one of the claims 1 to 2, **characterized in that**
- a line section (32) of a main line strand (4,6) is connected to one of the main line terminals (18a,b), respectively.

4. Motor vehicle electrical system (2) according to one of the claims 1 to 3, **characterized in that**
- the main line strands (4,6) are short-circuited with one another in the region of their respective distal ends, in particular **in that** the main line strands (4,6) are directly connected with one another in the region of the short-circuit.

5. Motor vehicle electrical system (2) according to one of the preceding claims,, **characterized in that**
- at least one motor vehicle electrical system switching network (14) has at least one fourth switch (24) between a cross-line strand connection (22) and the common node (26).

6. Motor vehicle electrical system (2) according to one of the preceding claims, **characterized in that**
- the main line strands (4,6) are connected to one another via at least one cross-line strand (34).

7. Motor vehicle electrical system (2) according to one of the preceding claims, **characterized in that**
- a cross-line strand (34) is connected to a cross-line strand terminal (22).

8. Motor vehicle electrical system (2) according to one of the preceding claims, **characterized in that**
- the main line strands (4,6) and the cross-line strands (34) form an at least in parts, preferably a fully meshed distribution network.

9. Motor vehicle electrical system (2) according to one of the preceding claims, **characterized in that**
- at least one of the line sections (32) and/or at least one of the cross-line strands (34) is formed as a flat cable, in particular from a flat cable made of a solid material, in particular from a copper material or an aluminium material.

10. Motor vehicle electrical system (2) according to one of the preceding claims, **characterized in that**
- the switches (24) are individually controllable.

11. Motor vehicle electrical system (2) according to one of the preceding claims, **characterized in that**
- at least one of the vehicle electrical system switching networks (14) has a current sensor and/or a voltage sensor and/or a temperature sensor, and **in that** at least one of the switches (24) is controlled as a function of a sensor signal.

12. Motor vehicle electrical system (2) according to one of the preceding claims, **characterized in that**
- at least one of the on-board power supply systems is formed as an energy storage, in particular as a battery (12,a,b), accumulator or as a DC/DC converter or generator.

13. Motor vehicle electrical system (2) according to one of the preceding claims, **characterized in that**
- the load (16) is connected to the load terminal via a single power cable (20a,b).

14. A motor vehicle with an motor vehicle electrical system (2) for one of the preceding claims and at least two on-board power supplies and one load (16).

## Revendications

1. Réseau de bord de véhicule automobile (2), avec
- au moins deux faisceaux de conduite principaux (4, 6), disposés l'un par rapport à l'autre au niveau électrique, sachant que les deux faisceaux de conduite (4, 6) sont électriquement court-circuités ensemble dans deux sections séparées l'une de l'autre, et avec pour chacune d'au moins deux alimentation d'énergie de réseau de bord,
- sachant qu'un réseau de commutation (14) de réseau de bord de véhicule automobile, interrompant le faisceau de conduite principale (4, 6) respectif, est disposé dans les au moins deux faisceaux de conduite principaux (4, 6), le réseau de commutation (14) étant doté d'au moins trois commutateurs (24),
- sachant qu'un premier commutateur (24) est disposé entre un premier raccord de faisceau de conduite principale (18a) et un nœud (26) commun,
- qu'un deuxième commutateur (24) est disposé entre un deuxième raccord de faisceau de conduite principale (18b) et le nœud commun (26), et
- qu'un troisième commutateur (24) est disposé entre le nœud commun (26) et au moins un raccord de consommateur (20a, b),
**caractérisé en ce que**
les deux faisceaux de conduite principale (4, 6) sont couplés avec un dispositif de communication, le dispositif de communication émettant des signaux de commande pour au moins un commutateur (24) sur les faisceaux de conduite principale (4, 6) de sorte que les réseaux de commutation (14) soient commandés par communication CPL.

2. Réseau de bord de véhicule automobile ((2) selon la revendication 1,
**caractérisé en ce que**
tout au moins l'un des faisceaux de conduite principale (4, 6) sont composés d'au moins trois sections de conduite (32), sachant que l'une des sections de conduite (32) est disposée entre deux réseaux de commutation (14) de véhicule automobile.

3. Réseau de bord de véhicule automobile ((2) selon l'une des revendications 1 à 2,
**caractérisé en ce que**
chacune des sections de conduite (32) d'un faisceau de conduite principale (4, 6) est raccordée à l'un des raccords de faisceau de conduite principale (18a, b).

4. Réseau de bord de véhicule automobile ((2) selon l'une des revendications 1 à 3,
**caractérisé en ce que**
les faisceaux de conduite principale (4, 6) sont court-circuités ensemble dans la partie de leurs extrémités distales respectives, en particulier que les faisceaux de conduite principale (4, 6) sont directement reliés ensemble dans la partie du court-circuit.

5. Réseau de bord de véhicule automobile ((2) selon l'une des revendications précédentes,
**caractérisé en ce que**,
entre un raccord de faisceau de conduite transversale (22) et le nœud commun (26), au moins un réseau de commutation (14) est doté d'au moins un quatrième commutateur (24).

6. Réseau de bord de véhicule automobile ((2) selon l'une des revendications précédentes,
**caractérisé en ce que**
les faisceaux de conduite principale (4, 6) sont reliés ensemble par l'intermédiaire d'au moins un faisceau de conduite transversale (34).

7. Réseau de bord de véhicule automobile ((2) selon l'une des revendications précédentes,
**caractérisé en ce qu'**
qu'un faisceau de conduite transversale (34) est raccordé à un raccord de faisceau de conduite transversale (22).

8. Réseau de bord de véhicule automobile ((2) selon l'une des revendications précédentes,
**caractérisé en ce que**
les faisceaux de conduite principale (4, 6) et les faisceaux de conduite transversale (34) forment un réseau de distribution partiellement ou, de préférence, totalement maillé.

9. Réseau de bord de véhicule automobile ((2) selon l'une des revendications précédentes,
**caractérisé en ce qu'**
au moins l'une des sections de conduite (32) et / ou au moins l'un des faisceaux de conduite transversale (34) sont réalisés en forme de conduites plates, en particulier d'une conduite plate en matériau plein, en particulier en matériau en cuivre ou matériau en aluminium.

10. Réseau de bord de véhicule automobile ((2) selon l'une des revendications précédentes,
**caractérisé en ce que**
chacun des connecteurs (24) peut être peutêtre commandé individuellement.

11. Réseau de bord de véhicule automobile ((2) selon l'une des revendications précédentes,
**caractérisé en ce qu'**
au moins l'un des réseaux de connexion du réseau de bord de véhicule automobile (14) est doté d'un capteur de courant et / ou d'un capteur de tension et / ou d'un capteur de température et qu'au moins l'un des connecteurs (24) est commandé en fonction d'un signal de capteur.

12. Réseau de bord de véhicule automobile ((2) selon l'une des revendications précédentes,
**caractérisé en ce qu'**
au moins l'une des alimentations en énergie de réseau de bord est réalisée en forme de batterie (12a, b), d'accumulateur ou de convertisseur CC / CC ou de générateur.

13. Réseau de bord de véhicule automobile ((2) selon l'une des revendications précédentes, **caractérisé en ce que**
le consommateur (16) est relié au raccord consommateur (20a, b) par l'intermédiaire d'un câble d'énergie.

14. Véhicule automobile avec un réseau de bord de véhicule automobile ((2) selon l'une des revendications précédentes et au moins deux alimentations en énergie de réseau de bord et un consommateur (16).
